# EUROPÄISCHE PATENTSCHRIFT

(11) **EP 0 755 315 B1**
(45) Veröffentlichungstag und Bekanntmachung des Hinweises auf die Patenterteilung: **19.08.1998**
(21) Anmeldenummer: 96901789.6
(22) Anmeldetag: 06.02.1996
(51) Int. Cl.: B23Q 39/04

(54) **MEHRSPINDELDREHMASCHINE**
MULTIPLE-SPINDLE LATHE
TOUR MULTIBROCHE

(30) Priorität: 10.02.1995 DE 19504370
(43) Veröffentlichungstag der Anmeldung: 29.01.1997
(73) Patentinhaber: INDEX-WERKE GMBH & CO. KG HAHN & TESSKY, 73730 Esslingen (DE)
(72) Erfinder: LINK, Helmut, D-73773 Aichwald (DE); TRAUTMANN, Günther-Heinrich, D-73230 Kirchheim (DE)
(74) Vertreter: Beck, Jürgen
(86) Internationale Anmeldenummer: EP9600495
(87) Internationale Veröffentlichungsnummer: WO9624464

(56) Entgegenhaltungen:
- DE-A- 2 528 001

## Beschreibung

Die Erfindung betrifft eine Mehrspindeldrehmaschine umfassend ein Maschinengestell, zwei auf gegenüberliegenden Seiten eines Arbeitsraums angeordnete und an dem Maschinengestell jeweils um eine im wesentlichen horizontale Drehachse drehbar gelagerte Trommeln, an den Trommeln in jeweils einzelnen Positionen angeordnete Bearbeitungseinrichtungen mit im wesentlichen parallel zur Drehachse ausgerichteten Mittelachsen und Werkzeuge zur Bearbeitung von in mindestens einem Teil der Bearbeitungseinrichtungen gehaltenen Werkstücken.

Eine derartige Mehrspindeldrehmaschine ist beispielsweise aus der DE-OS 25 28 001 bekannt. Bei der in dieser Druckschrift offenbarten Mehrspindeldrehmaschine sind eine Trommel und eine Gegentrommel auf gegenüberliegenden Seiten des Arbeitsraums angeordnet, die Trommel und die Gegentrommel sind jedoch durch eine zentrale und drehfest mit den Trommeln verbundene Welle starr gekoppelt, wobei außerdem auf dieser Welle noch Führungen für die zu bearbeitenden Werkstücke sitzen.

Diese Lösung hat den großen Nachteil, daß die auf einer derartigen Mehrspindeldrehmaschine gegebenen Bearbeitungsmöglichkeiten im wesentlichen auf die in dieser Druckschrift dargestellte Bearbeitung von Wellenteilen eingeschränkt sind.

Der Erfindung liegt daher die Aufgabe zugrunde, eine Mehrspindeldrehmaschine der gattungsgemäßen Art derart zu verbessern, daß diese möglichst universell auch für andere Werkstücke einsetzbar ist.

Diese Aufgabe wird bei einer Mehrspindeldrehmaschine der eingangs beschriebenen Art erfindungsgemäße dadurch gelöst, daß die Trommeln unabhängig voneinander gegenüber dem Maschinengestell um ihre Drehachse drehbar sind.

Die erfindungsgemäße Lösung eröffnet insbesondere die Möglichkeit, die Vielzahl der in den Trommeln vorhandenen Bearbeitungseinrichtungen optimal und zur Reduzierung der Stückzeit zu nutzen.

Diese Lösung hat den großen Vorteil, daß dadurch, daß die Trommeln nicht mehr starr miteinander gekoppelt sind, eine Vielzahl von zusätzlichen Bearbeitungsmöglichkeiten eröffnet wird, da beispielsweise die Möglichkeit besteht, die Trommeln unabhängig voneinander zu drehen und somit die Bearbeitungseinrichtungen in jeder Trommel unabhängig voneinander von einer Drehstellung oder Station in die nächste zu bewegen, so daß die Zeiten, in denen sich die Bearbeitungseinrichtungen einer Trommel in einer Drehstellung oder Station zur Bearbeitung mittels der Station zugeordneter Werkzeuge aufhalten, unabhängig sind von den Zeiten, in denen die Bearbeitungseinrichtungen der anderen Trommel in einer für diese vorgesehenen Drehstellung oder Station stehen, um Bearbeitungen mit den dieser Drehstellung oder Station zugeordneten Werkzeugen durchzuführen.

Beispielsweise besteht die Möglichkeit, mit ein und demselben Werkzeug Werkstücke zu bearbeiten, die in einer Station von der Bearbeitungseinrichtung einer Trommel gehalten werden und anschließend mit demselben Werkzeug Werkstücke, die in der gegenüberliegenden Station von der Bearbeitungseinrichtung der anderen Trommel gehalten werden.

Bei der vorstehend beschriebenen Lösung könnte prinzipiell noch eine mechanische Verbindung zur Stabilisierung der Drehlagerung beider Trommeln vorgesehen sein, die den zwischen einander zugewandten Stirnseiten der Trommeln liegenden Arbeitsraum durchsetzt.

Besonders vorteilhaft ist die erfindungsgemäße Lösung jedoch dann, wenn der zwischen einander zugewandten Stirnseiten der Trommeln liegende Arbeitsraum frei von mechanischen Verbindungen zwischen den Trommeln ist, so daß die Bearbeitung von Werkstücken erheblich erleichtert wird, da zusätzlicher Raum, insbesondere radial innerhalb der Positionen der Bearbeitungseinrichtungen, zur Verfügung steht, um beispielsweise Werkzeughalter mit mehreren Werkzeugen zu verwenden und dabei ein nicht benötigtes Werkzeug in dem radial innerhalb der Bearbeitungseinrichtungen liegenden Teilbereich des Arbeitsraums zu positionieren oder diesen Teilbereich des Arbeitsraums dazu zu verwenden, um durch diesen hindurch ein Werkzeug zu einem Werkstück in einer der Bearbeitungseinrichtungen zu führen.

Ferner hat der Wegfall jeglicher mechanischer Verbindung zwischen den Trommeln in dem zwischen den einander zugewandten Stirnseiten liegenden Arbeitsraum den zusätzlichen Vorteil, daß nunmehr ein freier Fall der Späne gewährleistet ist und eine Vielzahl von Maßnahmen, um die Späne von den mechanischen Verbindungen zu entfernen, unterbleiben kann.

Rein prinzipiell wäre es noch möglich, einen gemeinsamen Antriebsmotor für beide Trommeln und für jede Trommel eine Kupplung mit einem entsprechenden Getriebe vorzusehen, um diese unabhängig voneinander bewegen zu können. Besonders konsequent ist jedoch das erfindungsgemäße Konzept dann durchgeführt, wenn jede der Trommeln durch einen eigenen Drehantrieb antreibbar ist, da dieser konstruktiv eine wesentlich einfachere und auch kostengünstigere Lösung darstellt und außerdem die Dimensionierung des Arbeitsraums über die Stirnseiten der Trommeln hinaus ohne geometrische Beschränkungen bedingt durch die Antriebslösung erfolgen kann.

Besondere Vorteile hinsichtlich des Aufbaus der erfindungsgemäßen Mehrspindeldrehmaschine ergeben sich dann, wenn jede Trommel mit dem zugeordneten Drehantrieb in einem für die Trommel vorgesehenen Ständer des Maschinengestells vorgesehen ist und jeder Ständer mit der Trommel und dem Drehantrieb eine modulare Einheit des Maschinengestells bildet.

Die Drehantriebe könnten prinzipiell - wie beispielsweise aus dem Stand der Technik bekannt - als Malteserkreuz-Drehantriebe ausgebildet sein, mit welchen jede Trommel um einen vorgegebenen Winkel schrittweise drehbar ist, um insbesondere die Bearbeitungseinrichtungen von Station zu Station zu bewegen.

Besonders vorteilhaft ist es jedoch, wenn die Drehantriebe für die Trommeln als NC-gesteuerte C-Achsenantriebe ausgebildet sind, da diese die Möglichkeit eröffnen, die Trommeln unabhängig von vorgegebenen Drehwinkeln in beliebigen Drehwinkeln zu drehen auch die, mit den Trommeln Eilgangbewegungen um beliebige Winkel durchzuführen und zusätzlich noch die Möglichkeit eröffnen, dann, wenn die Trommeln in einzelnen Drehstellungen fixierbar sein sollen, diese Trommeln mit hoher Präzision in die jeweilige Drehstellung zu bringen, um schneller die Fixierung vorzunehmen.

Um die Trommeln in einzelnen Drehstellungen zu fixieren, ist vorzugsweise eine Hirthverzahnung zwischen der jeweiligen Trommel und dem Maschinengestell vorgesehen, wobei dann, wenn die Trommel mittels eines NC-gesteuerten C-Achsenantriebs drehbar sind, die Hirthverzahnung so ausgebildet sein kann, daß sie schneller einrückbar ist als bei den bekannten Malteserkreuz-Drehantrieben, so daß dadurch die Totzeiten bei der Bearbeitung der Werkstücke in der erfindungsgemäßen Mehrspindeldrehmaschine verkürzt werden können.

Um zusätzlich noch die Möglichkeit zu schaffen, mit einander gegenüberliegenden Bearbeitungseinrichtungen ein und dasselbe Teil zu bearbeiten oder von einer Bearbeitungseinrichtung der einen Trommel in die Bearbeitungseinrichtung der anderen Trommel zu übergeben, ist vorzugsweise vorgesehen, daß die Drehantriebe der beiden Trommeln über eine Steuerung miteinander korrelierbar sind.

Die Korrelation der Drehantriebe kann im einfachsten Fall nur eine einzige Drehstellung der beiden Trommeln betreffen, sie kann aber auch soweit geführt werden, daß die beiden Trommeln zumindest partiell eine miteinander synchronisierte Drehbewegung durchführen, beispielsweise um ein von einander gegenüberliegenden Bearbeitungseinrichtungen gehaltenes Werkstück über einen vorgegebenen Winkelbereich gemeinsam zu bewegen und in einer Spindelstation oder auch während einer Drehung der Trommeln zu bearbeiten.

Hinsichtlich der Anordnung der Trommeln selbst wurden bislang keine näheren Angaben gemacht. So wäre es beispielsweise denkbar, die Drehachsen der beiden Trommeln parallel zueinander verlaufen, jedoch nicht koaxial zueinander anzuordnen, so daß beispielsweise in einer oder zwei Drehstellungen der Spindeltrommeln Bearbeitungseinrichtungen einander gegenüberstehen. Besonders vorteilhaft ist es jedoch, insbesondere um einen möglichst kompakten Aufbau der erfindungsgemäßen Mehrspindeldrehmaschine zu erhalten, wenn die Drehachsen der beiden Trommeln zusammenfallen, das heißt beide Trommeln koaxial zueinander drehbar sind.

Hinsichtlich der Anordnung der Bearbeitungseinrichtung selbst an der jeweiligen Trommel wurden bislang keine näheren Angaben gemacht. So sieht ein vorteilhaftes Ausführungsbeispiel vor, daß die Bearbeitungseinrichtungen einer Trommel mit ihren Mittelachsen in im wesentlichen gleichem radialem Abstand von der Drehachse angeordnet sind. Dadurch wird die Möglichkeit geschaffen, in den einzelnen Stationen Werkstücke in nacheinander in diese Stationen kommenden Bearbeitungseinrichtungen mit derselben Werkzeugeinstellung zu bearbeiten.

Um ebenfalls in festgelegten Stationen die in den Bearbeitungseinrichtungen gehaltenen Werkstücke vorteilhaft bearbeiten zu können, ist vorgesehen, daß die Bearbeitungseinrichtungen einer Trommel im selben Winkelabstand voneinander um die Drehachse herum angeordnet sind, wobei in gleicher Weise die einzelnen Spindelstationen ebenfalls in demselben Winkelabstand oder in einem ganzzahligen Vielfachen dieses Winkelabstands angeordnet sind, so daß beispielsweise stets mehrere Bearbeitungseinrichtungen in jeweils einer von mehreren Stationen stehen.

Prinzipiell könnten die Bearbeitungseinrichtungen in den beiden verschiedenen Trommeln einen unterschiedlichen radialen Abstand von der Drehachse der jeweiligen Trommel aufweisen, wobei allerdings in diesem Fall ein Zusammenwirken zweier Bearbeitungseinrichtungen, von denen jede auf einer anderen Trommel angeordnet ist, nur dann möglich wäre, wenn die Trommeln nicht um dieselbe Drehachse, sondern um parallel zueinander versetzte Drehachsen drehbar sind.

Besonders vorteilhaft ist es daher, wenn die Bearbeitungseinrichtungen auf beiden Trommeln im gleichen radialen Abstand von der Drehachse der jeweiligen Trommel angeordnet sind.

Hinsichtlich der Zahl der auf den einzelnen Trommeln vorgesehenen Bearbeitungseinrichtungen wurden bislang keine näheren Angaben gemacht. So sieht ein erfindungsgemäßes Ausführungsbeispiel vor, daß die Zahl der Bearbeitungseinrichtungen auf der ersten Trommel gleich der Zahl der Bearbeitungseinrichtungen auf der zweiten Trommel ist.

In diesem Fall ist es vorteilhaft, wenn die Bearbeitungseinrichtungen auf beiden Trommeln in gleichen Winkelabständen voneinander angeordnet sind, so daß die Möglichkeit besteht, jeweils eine Bearbeitungseinrichtung der einen Trommel und eine Bearbeitungseinrichtung der anderen Trommel in einander entsprechenden Stationen zu positionieren.

Diese Lösung wird insbesondere dann Anwendung finden, wenn zumindest in einem Teil der Stationen beide Bearbeitungseinrichtungen zur Bearbeitung des Werkstücks erforderlich sind, sei es daß das Werkstück durch beide Bearbeitungseinrichtungen gehalten oder durch eine Bearbeitungseinrichtung gehalten und durch die andere geführt wird.

Bei einer Vielzahl von Werkstückbearbeitungen, beispielsweise bei Vor- und Rückseitenbearbeitungen von Werkstücken, ist jedoch die Zahl der Bearbeitungen auf einer Seite des Werkstücks kleiner als die Zahl der Bearbeitungen des Werkstücks auf der anderen Seite.

Aus diesem Grund ist es vielfach nicht erforderlich und auch nicht günstig, in beiden Trommeln die gleiche Zahl von Bearbeitungseinrichtungen vorzusehen. Zweckmäßigerweise ist daher bei einem Ausführungsbeispiel der erfindungsgemäßen Lösung vorgesehen, daß die Zahl der Bearbeitungseinrichtungen auf einer Trommel kleiner ist als die Zahl der Bearbeitungseinrichtungen auf der anderen Trommel. Im Extremfall wäre es denkbar, auf einer Trommel lediglich eine Bearbeitungseinrichtung vorzusehen, während auf der anderen Trommel eine Vielzahl, beispielsweise sechs oder acht Bearbeitungseinrichtungen vorgesehen werden können.

Bereits diese eine Bearbeitungseinrichtung auf einer Trommel erlaubt dabei bislang nicht bekannte Bearbeitungsmöglichkeiten, nämlich dadurch, daß die eine Bearbeitungseinrichtung auf der einen Trommel ein Werkstück von einer der Bearbeitungseinrichtungen der anderen Trommel in einer Drehstellung übernimmt, gegebenenfalls in dieser oder einer anderen Drehstellung fertig bearbeitet und in dieser oder einer anderen Drehstellung in einer Entladeeinrichtung ablegt, während mit den Bearbeitungseinrichtungen der anderen Trommel weitere Werkstückbearbeitungen oder ein Aufnehmen eines Werkstücks aus einer Ladeeinrichtung erfolgen.

Die Art der Bearbeitungseinrichtungen wurde im Zusammenhang mit den bisherigen Ausführungsbeispielen nicht näher spezifiziert. So sieht ein vorteilhaftes Ausführungsbeispiel vor, daß zumindest ein Teil der Bearbeitungseinrichtungen als Werkstückspindel ausgebildet ist.

Eine weitere, vielseitig einsetzbare und vorteilhafte Variante sieht vor, daß die Bearbeitungseinrichtungen einer Trommel als Werkstückspindeln ausgebildet sind, um mit diesen Werkstücke zur Bearbeitung zu halten.

Alternativ dazu besteht aber auch die Möglichkeit, beispielsweise einer als Werkstückspindel ausgebildeten Bearbeitungseinrichtung zum Bearbeiten des Werkstücks eine nicht als Werkstückspindel ausgebildete Bearbeitungseinrichtung zuzuordnen, wobei die Zuordnung von der Art der Bearbeitung des Werkstücks abhängig ist.

Im Zusammenhang mit der bisherigen Erläuterung der einzelnen Ausführungsbeispiele wurde nicht darauf eingegangen, wie die Bearbeitungseinrichtungen relativ zur jeweiligen Trommel angeordnet sind. Beispielsweise ist es denkbar, die Bearbeitungseinrichtungen fest auf der Trommel anzuordnen. Besonders dann, wenn zwei einander gegenüberliegende Bearbeitungseinrichtungen miteinander Zusammenwirken sollen, sieht eine vorteilhafte Lösung vor, daß mindestens eine der Bearbeitungseinrichtungen relativ zu deren Trommel in Richtung ihrer Mittelachse bewegbar ist.

Darüber hinaus ist es bei als Werkstückspindeln ausgebildeten Bearbeitungseinrichtungen vorteilhaft, wenn diese relativ zur Trommel in Richtung ihrer eine Spindelachse darstellenden Mittelachse bewegbar sind, da damit die Möglichkeit besteht, eine Bearbeitung des in dieser Werkstückspindel gehaltenen Werkstücks durch Relativverschiebung in Richtung der Z-Achse dadurch durchzuführen, daß die Werkstückspindel relativ zu ihrer Trommel verfahrbar ist. Eine derartige Verfahrbarkeit des Werkstücks in Richtung der Z-Achse bringt den Vorteil einer höheren rundlauf- und zylindrischen Genauigkeit des mit einer derartigen Werkstückspindel hergestellten Werkstücks.

Insbesondere dann, wenn mehrere Bearbeitungseinrichtungen jeweils in Richtung ihrer Mittelachse bewegbar sind, ist es vorteilhaft, wenn die Bearbeitungseinrichtungen relativ zur jeweiligen Trommel in Richtung ihrer Mittelachse unabhängig voneinander bewegbar sind, da damit die Möglichkeit besteht, die Bearbeitungseinrichtungen entsprechend der gewünschten Bearbeitung zu bewegen und keine Rücksicht auf die mit unterschiedlichen Bearbeitungseinrichtungen vorgesehenen Bearbeitungen genommen werden muß.

Besonders vorteilhaft ist eine Lösung, bei welcher jeder in Richtung ihrer Mittelachse bewegbaren Bearbeitungseinrichtung ein eigener Linearantrieb zur Bewegung derselben in Richtung der Mittelachse zugeordnet ist, da damit eine besonders einfache Lösung für eine unabhängige Bewegbarkeit der Bearbeitungseinrichtungen gegeben ist.

Besonders zweckmäßig, insbesondere hinsichtlich der Genauigkeit der Positionierung der Bearbeitungseinrichtungen ist es, wenn jede Bearbeitungseinrichtung ständig mit dem Linearantrieb gekoppelt ist, da damit die beispielsweise aus der in der DE-OS 25 28 001 offenbarten Lösung bekannten Probleme bei der Ankopplung des jeweiligen Linearantriebs an die jeweilige Bearbeitungseinrichtung zur Verschiebung derselben nicht mehr auftreten und somit die damit verbundenen Probleme hinsichtlich der Genauigkeit der Positionierung der Bearbeitungseinrichtung entfallen.

Der Linearantrieb zur Verschiebung der Bearbeitungseinrichtung könnte - ähnlich wie bei der DE-OS 25 28 001 - auch als kurvengesteuerter Antrieb ausgebildet sein. Besonders vorteilhaft ist jedoch, wenn die Bearbeitungseinrichtung bezüglich ihrer Position in Richtung der Mittelachse mittels des Linearantriebs definiert positionierbar und fixierbar ist, so daß beispielsweise auch Kopierdreharbeiten durchführbar sind, die mit kurvengesteuerten Linearantrieben nicht möglich sind, da diese nur in einer Richtung, nicht jedoch in der entgegengesetzten Richtung, eine genaue Positionierung der Bearbeitungseinrichtung erlauben.

Beispielsweise ist hierzu der Linearantrieb als Spindelantrieb ausgebildet.

Um eine möglichst hohe Genauigkeit bei der Bearbeitung der Werkstücke zu erreichen, ist vorgesehen, daß jede Bearbeitungseinrichtung selbst als Ganzes relativ zur Trommel ausschließlich linear bewegbar ist, wodurch die Möglichkeit einer einfachen aber sehr präzisen Führung der Bearbeitungseinrichtung eröffnet wird.

Der Linearantrieb ist vorzugsweise an der jeweiligen Trommel angeordnet, wobei dieser auch damit einen an der jeweiligen Trommel angeordneten Antriebsmotor aufweist.

Um die radiale Ausdehnung der Trommel möglichst gering zu halten und einen möglichst kompakten Aufbau zu erreichen ist vorgesehen, daß der Linearantrieb radial außenliegend der jeweiligen Bearbeitungseinrichtung an der Trommel angeordnet ist.

Besonders kompakt wird der Aufbau dann, wenn der Linearantrieb bezüglich der Drehachse mit Winkelversatz zur jeweiligen Bearbeitungseinrichtung angeordnet ist, wobei diese Anordnung dadurch optimierbar ist, daß der Linearantrieb in einem Winkelzwischenraum zwischen zwei Bearbeitungseinrichtungen angeordnet ist.

Die Trommeln könnten prinzipiell beliebig in einer Drehrichtung weiter drehbar sein, wie dies beispielsweise bei der eingangs beschriebenen Mehrspindeldrehmaschine der Fall ist.

Besonders vorteilhaft ist es jedoch, wenn jede der Trommeln von einer Ausgangsstellung um einen Maximalwinkel bis zu einer Endstellung in einer Richtung und dann wieder zurück in die Ausgangsstellung drehbar ist und jeweils vom Maschinengestell zur jeweiligen Trommel ein flexibler Versorgungsstrang geführt ist, welche der Drehbewegung um den Maximalwinkel folgt. Diese Lösung hat den großen Vorteil, daß über den flexiblen Versorgungsstrang eine ständige Versorgung der Bearbeitungseinrichtungen und der Linearantriebe zur Bewegung der Bearbeitungseinrichtung möglich ist, ohne daß hierzu Drehzuführungen notwendig sind und daß die Versorgung auch beim Drehen der jeweiligen Trommel aufrecht erhalten werden kann, so daß bereits beim Drehen der jeweiligen Trommel eine geänderte Ansteuerung der jeweiligen Bearbeitungseinrichtung vorgenommen werden kann oder eine Ansteuerung des Linearantriebs, um die Bearbeitungseinrichtung bereits für die nächste Bearbeitung zu positionieren, oder auch um zu verhindern, daß die Bearbeitungseinrichtung mit einem stehend am Maschinengestell angeordneten Werkzeug kollidiert.

Besonders zweckmäßig ist es dabei, wenn die jeweilige Trommel bei der Drehung in einer Richtung von der Ausgangsstellung in die Endstellung die einzelnen vorgesehenen Bearbeitungen durchläuft, und dann aber von der Endstellung in die Ausgangsstellung in einem Zug im Eilgang zurückdreht und dann wiederum von der Ausgangsstellung in Richtung der Endstellung die einzelnen Bearbeitungen durchläuft.

Alternativ dazu ist es aber auch möglich, beim Zurückbewegen von der Endstellung in die Ausgangsstellung ebenfalls einzelne Bearbeitungen mit jeder Trommel zu durchlaufen.

Insbesondere vorteilhaft ist diese Lösung im Zusammenhang mit der erfindungsgemäßen unabhängigen Bewegbarkeit der einzelnen Spindeltrommeln, da dann mit den einzelnen Spindeltrommeln beim Zurückbewegen von der Endstellung in die Ausgangsstellung auch unterschiedlich verfahren werden kann.

Weitere Merkmale und Vorteile sind Gegenstand der nachfolgenden Beschreibung sowie der zeichnerischen Darstellung einiger Ausführungsbeispiele.

In der Zeichnung zeigen:
- Fig. 1: eine seitliche Ansicht einer teilweise längs Linie I-I in Fig. 2 und 3 geschnittenen erfindungsgemäßen Mehrspindeldrehmaschine mit Bearbeitungseinrichtungen, die beispielhaft als Werkstückspindel dargestellt sind;
- Fig. 2: einen Schnitt längs Linie II-II in Fig. 1;
- Fig. 3: einen Schnitt längs Linie III-III in Fig. 1;
- Fig. 4: eine ausschnittsweise vergrößerte Schnittdarstellung durch eine Trommel in Fig. 1;
- Fig. 5: einen Schnitt längs Linie V-V in Fig. 1;
- Fig. 6: eine vergrößerte Darstellung eines ersten Ausführungsbeispiels einer erfindungsgemäßen Bearbeitungseinrichtung;
- Fig. 7: eine vergrößerte Darstellung eines zweiten Ausführungsbeispiels einer erfindungsgemäßen Bearbeitungseinrichtung;
- Fig. 8: eine vergrößerte Darstellung eines dritten Ausführungsbeispiels einer erfindungsgemäßen Bearbeitungseinrichtung;
- Fig. 9: eine vergrößerte ausschnittsweise Darstellung eines Schnitts durch einen Werkzeugschlitten längs Linie VI-VI zum Beispiel in Fig. 2;
- Fig. 10: einen Schnitt längs Linie VII-VII in Fig. 1 in der Ausgangsstellung der Trommel;
- Fig. 11: einen Schnitt ähnlich Fig. 10 in der Endstellung der Trommel;
- Fig. 12: eine ausschnittsweise schematische Darstellung einer Bearbeitung eines Werkstücks bei einer ersten Version;
- Fig. 13: eine ausschnittsweise schematische Darstellung eines Werkstücks bei einer zweiten Version;
- Fig. 14: eine ausschnittsweise schematische Darstellung einer Bearbeitung eines Werkstücks bei einer dritten Version;
- Fig. 15: eine ausschnittsweise schematische Bearbeitung eines Werkstücks bei einer vierten Version;
- Fig. 16: einen Schnitt ähnlich Fig. 3 bei einer fünften Version und
- Fig. 17: eine schematische ausschnittsweise Darstellung einer Bearbeitung eines Werkstücks bei der fünften Version.

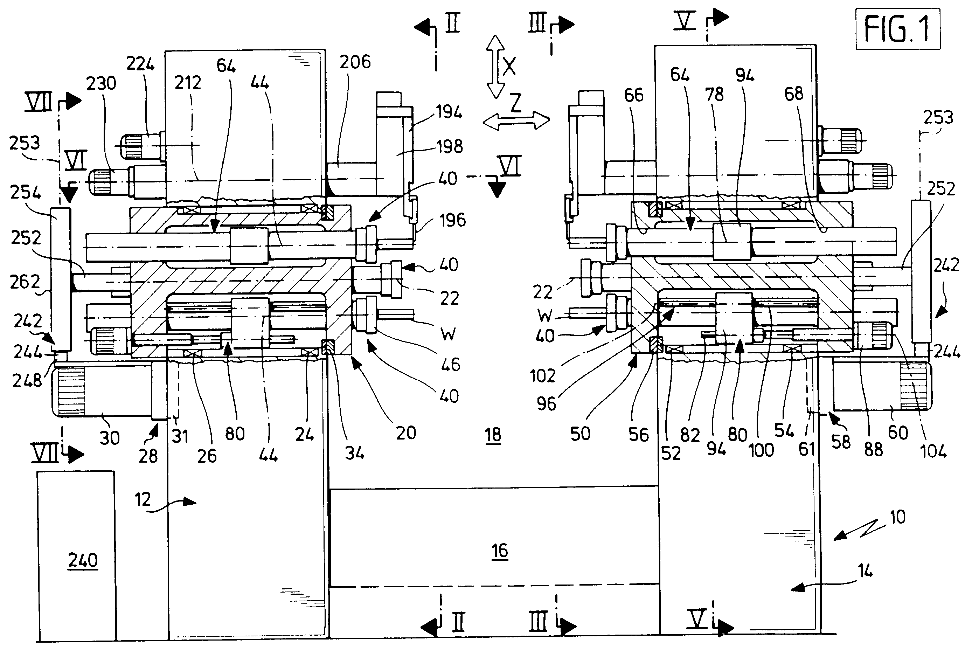

Ein Ausführungsbeispiel einer erfindungsgemäßen Mehrspindeldrehmaschine, dargestellt in Fig. 1, weist ein als Ganzes mit 10 bezeichnetes Maschinengestell auf, welches einen ersten Ständer 12, und einen zweiten Ständer 14 umfaßt, die mittels eines Basisteils 16 miteinander verbunden sind. Zwischen den Ständern 12, 14 liegt ein als Ganzes mit 18 bezeichneter Arbeitsraum.

In dem ersten Ständer 12 ist eine als Ganzes mit 20 bezeichnete erste Trommel mit einem vorderen, dem Arbeitsraum 18 zugewandten Trommellager 24 und einem hinteren Trommellager 26 auf einer dem Arbeitsraum 18 abgewandten Seite des ersten Ständers 12 um eine horizontale Drehachse 22 drehbar gelagert. Zum Drehen der Trommel 20 ist ein als Ganzes mit 28 bezeichneter Drehantrieb, umfassend einen Antriebsmotor 30 und zum Beispiel ein Zahnriemengetriebe 31 vorgesehen, mit welchem die Trommel 20 im Bereich des hinteren Trommellagers 26 antreibbar ist. Dabei ist der Drehantrieb 28 vorzugsweise als numerisch gesteuerte Drehachse ausgebildet, mit welcher die Trommel 20 präzise in jeder Drehstellung positionierbar ist.

Zur Fixierung der einzelnen Drehstellungen der Trommel 20 ist auf der dem Arbeitsraum 18 zugewandten Seite des ersten Ständers 12 eine zwischen diesem und der Trommel 20 wirksame dreiteilige Hirthverzahnung 34 vorgesehen, die zwischen dem vorderen Trommellager 24 und dem Arbeitsraum 18 liegt und hydraulisch betätigbar ist.

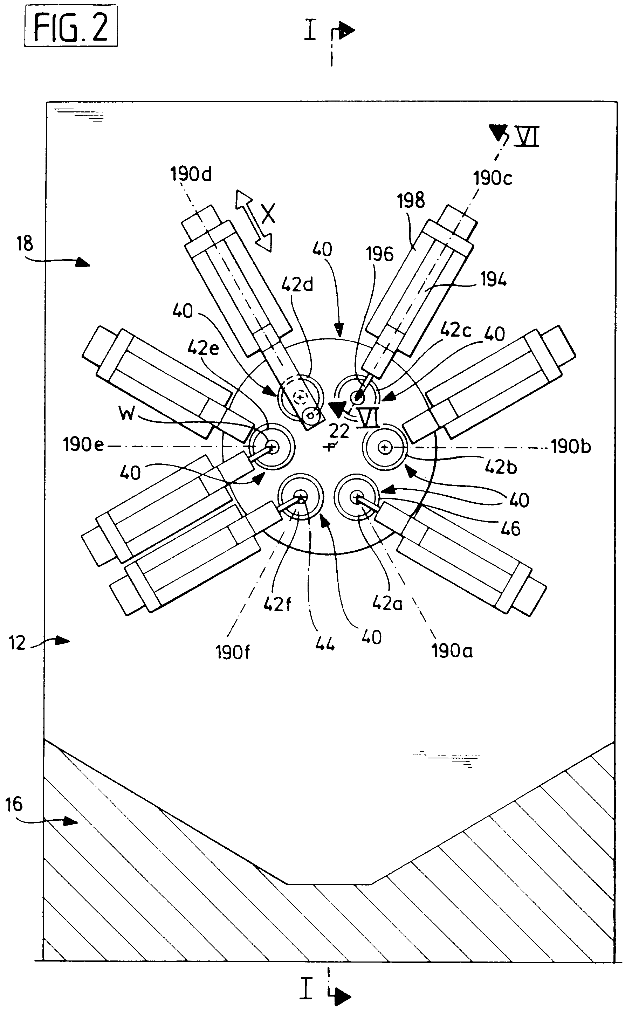

Wie in Fig.1 und 2 dargestellt, sind an der Trommel 20 eine Vielzahl von ersten Bearbeitungseinrichtungen 40, beispielsweise ausgebildet als Werkstückspindeln, in einzelnen Positionen 42a, 42b, 42c, 42d, 42e und 42f angeordnet, wobei die Bearbeitungseinrichtungen 40 in jeder der Positionen 42a denselben radialen Abstand von der Drehachse 22 aufweisen und alle Positionen in demselben Winkelabstand um die Drehachse 22 liegen.

Alle Bearbeitungseinrichtungen 40 erstrecken sich ferner mit ihrer Mittelachse 44 parallel zur Drehachse 22 und somit ebenfalls in horizontaler Richtung und sind so angeordnet, daß ein von den Bearbeitungseinrichtungen 40 umfaßtes Bearbeitungsmittel 46, beispielsweise ein Werkstückspannfutter, dem Arbeitsraum 18 zugewandt ist, so daß ein in diesen gespanntes Werkstück W im Arbeitsraum 18 bearbeitet werden kann.

In dem zweiten Ständer 14 ist als Träger für weitere Bearbeitungseinrichtungen 40 eine zweite Trommel 50 angeordnet, welche in dem zweiten Ständer 14 durch ein vorderes, dem Arbeitsraum 18 zugewandtes Trommellager 52 und ein hinteres Trommellager 54 auf einer dem Arbeitsraum 18 abgewandten Seite des zweiten Ständers 14 koaxial zur Drehachse 22 drehbar gelagert ist. Dabei ist zum Drehen der zweiten Trommel 50 ein Drehantrieb 58 mit einem Antriebsmotor 60 und einem Zahnriemengetriebe 61 vorgesehen, welcher im Bereich des hinteren Trommellagers 54 die zweite Trommel 50 antreibt. Vorzugsweise ist der Drehantrieb 58 ebenfalls als numerisch gesteuerte Drehachse ausgebildet, so daß die Trommel 50 in jeder beliebigen Drehstellung exakt positionierbar ist.

Zur Fixierung der einzelnen Drehstellungen der zweiten Trommel 50 ist auf der dem Arbeitsraum 18 zugewandten Seite des zweiten Ständers 14 eine zwischen diesem und der Gegentrommel 50 wirksame dreiteilige Hirthverzahnung 56 vorgesehen, die zwischen dem vorderen Trommellager 52 und dem Arbeitsraum 18 liegt und hydraulisch betätigbar ist.

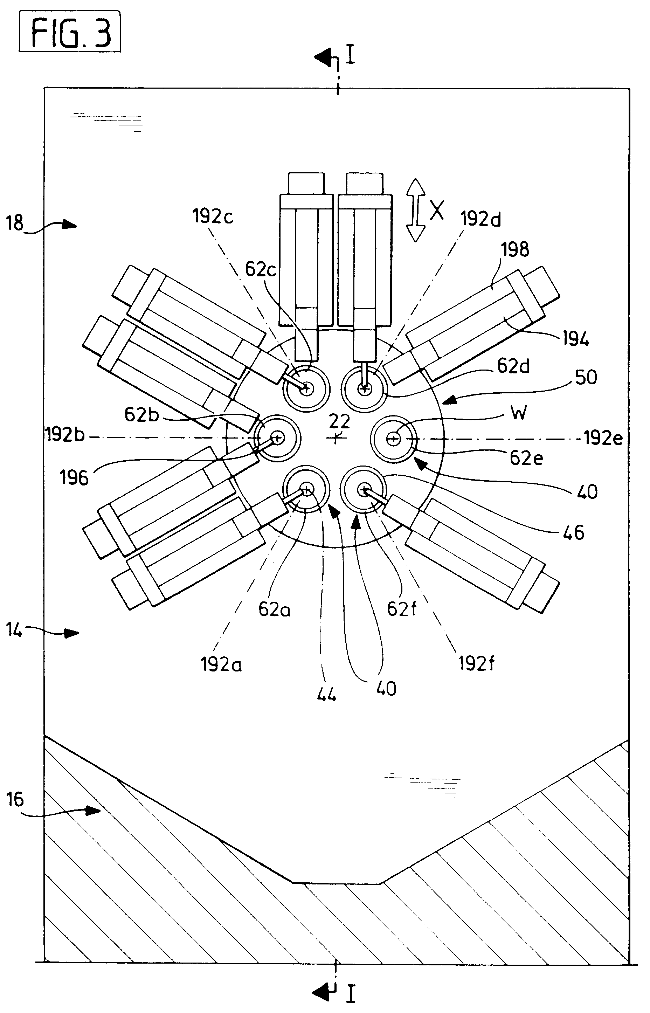

Wie in Fig. 3 dargestellt, sind in der zweiten Trommel sechs Positionen 62a bis f vorgesehen, wobei die einzelnen Positionen 62a bis f im selben radialen Abstand von der Drehachse 22 und beispielsweise im selben Winkelabstand relativ zueinander angeordnet sind wie die Positionen 42a bis f. In diesen Positionen 62a bis f sind Bearbeitungseinrichtungen 40 mit zur Drehachse 22 parallel ausgerichteten Mittelachsen 44 angeordnet, die unterschiedlichster Art sein können.

Jede der Bearbeitungseinrichtungen 40 ist in einer Pinole 64 angeordnet, wobei die Pinole 64 Führungsöffnungen 66 und 68 in einem vorderen Lagerschild 70 bzw. einem hinteren Lagerschild 72 der ersten Trommel 20 oder der zweiten Trommel 50 durchsetzt und in den Führungsöffnungen 66 und 68 entweder fest eingebaut oder mittels Linearführungen 74 und 76 in Richtung ihrer Mittelachse 78, die mit der Mittelachse 44 der Bearbeitungseinrichtungen 40 zusammenfällt, parallel zur Drehachse 22 verschieblich geführt ist.

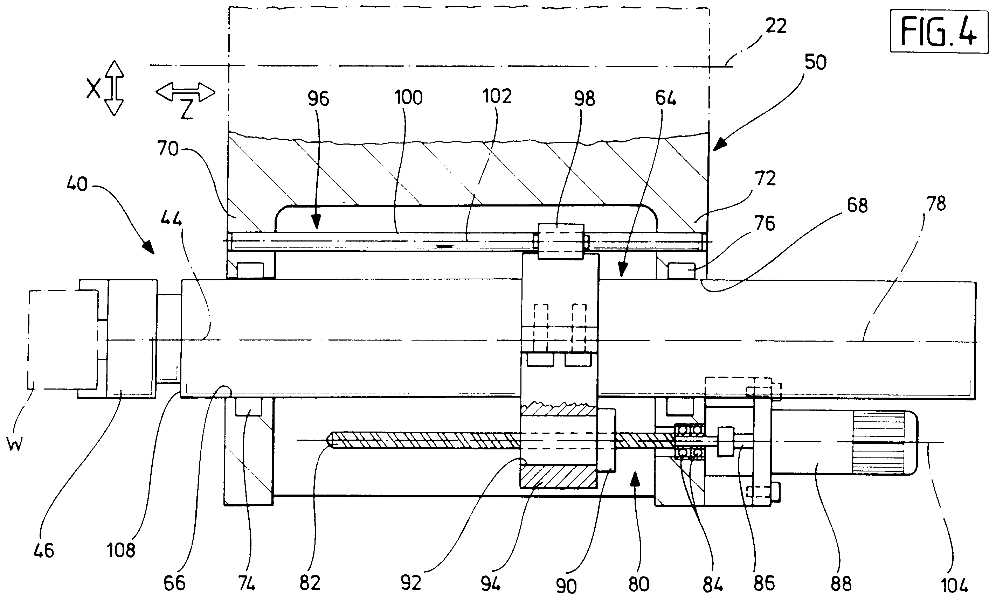

Zum definierten Verschieben der Pinole 64 relativ zur Trommel 20 und/oder zur Trommel 50 ist ein in Fig. 4 als Ganzes mit 80 bezeichneter Linearantrieb vorgesehen, welcher eine sich zwischen den Lagerschilden 70 und 72 erstreckende Kugelgewindespindel 82 umfaßt, welche mit einem Axial- und Radiallager 84 an dem hinteren Lagerschild 72 gelagert ist und direkt mit einer Motorwelle 86 eines Antriebsmotors 88 verbunden ist, der auf einer dem vorderen Lagerschild 70 abgewandten Seite des hinteren Lagerschildes 72 angeordnet und an diesem gehalten ist. Die Kugelgewindespindel 82 durchsetzt ihrerseits eine Kugelgewindemutter 90, welche in einem Durchbruch 92 eines Arms 94 angeordnet ist, der seinerseits die Pinole 64 an ihrer Außenseite umgreift und unverschieblich an dieser festgelegt ist. Der Arm 94 ist vorzugsweise auf einer dem Linearantrieb 80 gegenüberliegenden Seite in einer als Ganzes mit 96 bezeichneten Längsführung geführt, welche einen Führungskörper 98 aufweist, der seinerseits an einem Führungsstab 100 gleitet, wobei sich der Führungsstab 100 mit seiner Längsachse 102 parallel zur Mittelachse 78 der Pinole 64 und parallel zur Drehachse 22 erstreckt und in dem vorderen und hinteren Lagerschild 70 und 72 der Gegentrommel 50 gehalten ist. Die Längsführung 96 dient dabei zur drehfesten und in Richtung der Mittelachse 78 allerdings längsverschieblichen Führung der Pinole 64 an der Gegentrommel 50.

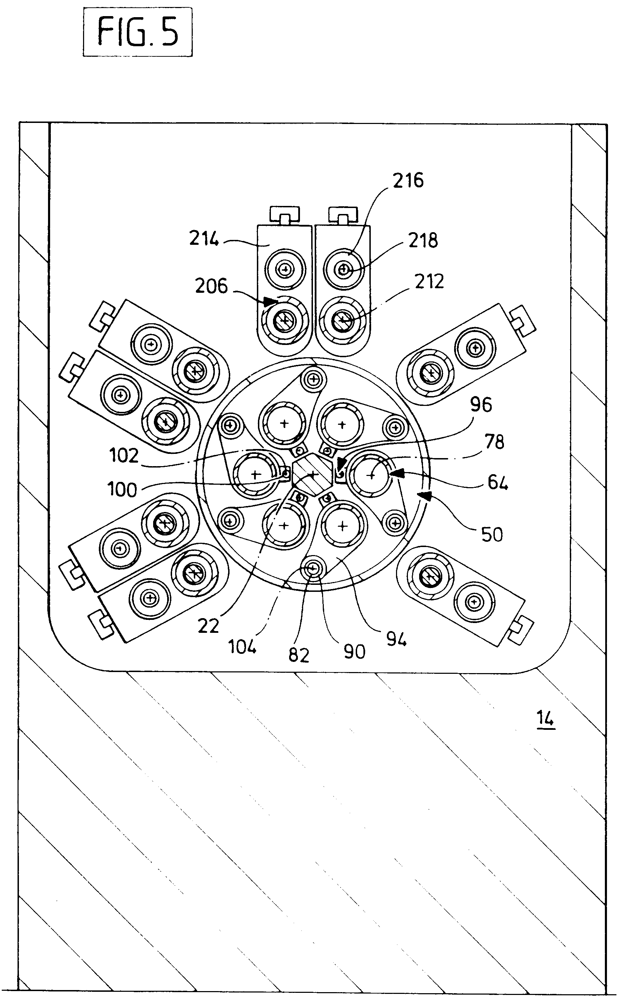

Vorzugsweise ist, wie in Fig. 5 dargestellt, der Linearantrieb 80 so angeordnet, daß seine Längsachse 104 in einem Winkelbereich mittig zwischen den Mittelachsen 78 zweier aufeinanderfolgender Pinolen 64, vorzugsweise auf Lücke zu diesen beiden Pinolen 64 angeordnet ist.

Vorzugsweise ist die Längsführung 96 auf einer der Drehachse 22 zugewandten Seite der jeweiligen Pinole 64 angeordnet, wie ebenfalls in Fig. 5 dargestellt.

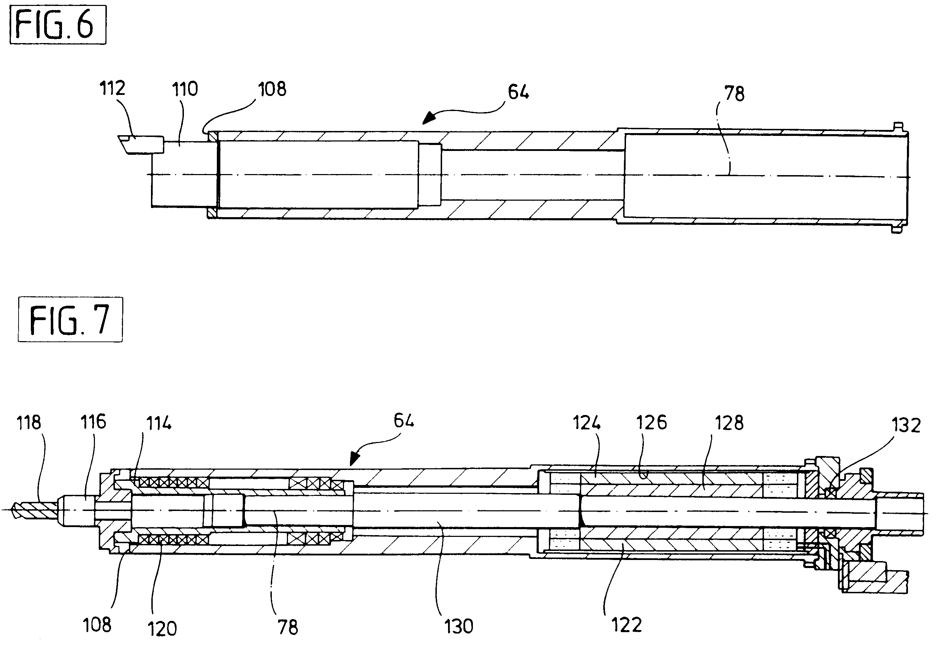

Die Bearbeitungseinrichtungen 40 können in unterschiedlichster Art und Weise ausgebildet sein. Beispielsweise kann - wie in Fig. 6 dargestellt - in einer Pinole 64 ein einfaches, fest in der Pinole 64 über einen Werkzeughalter 110 verankertes Werkzeug 112 angeordnet sein, das durch Bewegung der Pinole 64 auf das Werkstück in der gegenüberliegenden beispielsweise in Form einer Werkstückspindel ausgebildeten Bearbeitungseinrichtung 40 zu bewegbar ist, wobei die Drehlage des Werkzeugs 112 bezüglich der Mittelachse 78 durch die drehfeste Lagerung der Pinole 64 in der Trommel 50 eindeutig festgelegt ist.

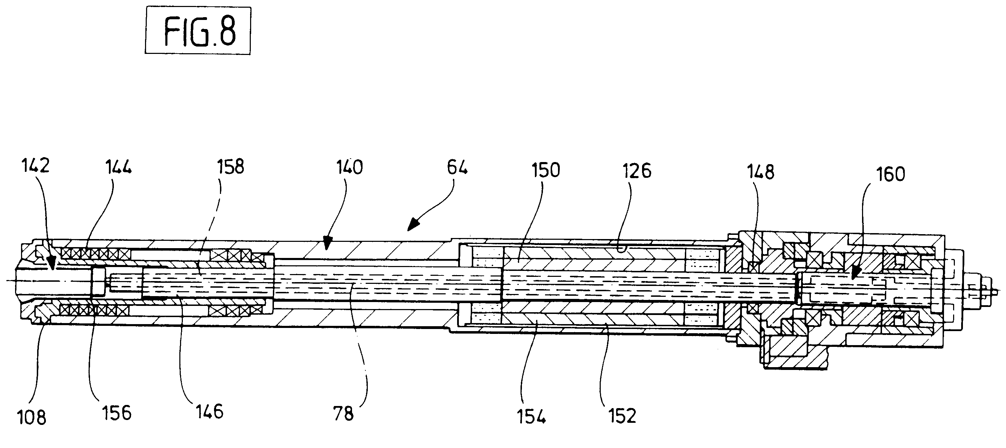

Eine zweite Möglichkeit einer erfindungsgemäßen Bearbeitungseinrichtung, dargestellt in Fig. 7, umfaßt eine in der Pinole 64 drehbar angeordnete Werkzeugaufnahme 114, in welche ein Halter 116 eines rotierenden Werkzeugs 118 einsetzbar ist, wobei das rotierende Werkzeug 118 beispielsweise als Fräser ausgebildet ist.

Diese Werkzeugaufnahme 114 ist über Drehlager 120 drehbar um die Mittelachse 78 in der Pinole 64 gelagert und durch einen Einbaumotor 122, welcher in einem der Werkzeugaufnahme 114 gegenüberliegenden Bereich der Pinole 64 aufgenommen ist, antreibbar. Dabei ist ein Stator 124 des Einbaumotors fest in einer endseitigen Ausnehmung 126 der Pinole 64 verankert, während ein Rotor 128 auf einer Antriebswelle 130 sitzt, die einerseits auf einer Seite über das Drehlager 120 der Werkzeugaufnahme 114 und andererseits über ein endseitiges Drehlager 132 im Bereich des der Werkzeugaufnahme 114 gegenüberliegenden Endes drehbar gelagert ist. Die Antriebswelle 130 treibt dabei die fest mit dieser verbundene Werkzeugaufnahme 114 an.

Durch Verschiebung der Pinole 64 längs ihrer Mittelachse 78 ist das rotierende Werkzeug 118 beispielsweise auf das in der gegenüberliegenden als Werkstückspindel ausgebildeten Bearbeitungseinrichtung 40 gehaltene Werkstück W zustellbar und gleichzeitig ist dieses Werkzeug 118 durch den Einbaumotor 122 rotierend antreibbar.

Bei einem dritten Ausführungsbeispiel einer erfindungsgemäßen Bearbeitungseinrichtung, dargestellt in Fig. 8 ist in der Pinole 64 eine als Ganzes mit 140 bezeichnete Werkstückspindel angeordnet. Diese Werkstückspindel 140 umfaßt ein als Ganzes mit 142 bezeichnetes Werkstückspannmittel, welches an der dem Arbeitsraum 18 zugewandten Vorderseite 108 der Pinole 64 in dieser angeordnet ist und in der Pinole 64 mittels eines Drehlagers 144 drehbar gelagert ist.

Das Werkstückspannmittel 142 sitzt dabei auf einem Spindelrohr 146, welches die gesamte Pinole 64 durchsetzt und rückseitig derselben über ein Drehlager 148 ebenfalls an dieser drehbar gelagert ist und dabei koaxial zur Mittelachse 78 als Drehachse drehbar ist. Auf dem Spindelrohr 146 sitzt ein Rotor 150 eines als Ganzes mit 152 bezeichneten Einbaumotors, wobei ein Stator 154 fest in der rückwärtigen Ausnehmung 126 der Pinole 64 angeordnet ist.

Zur Betätigung beispielsweise einer Spannzange 156 des Werkstückspannmittels führt von dieser innerhalb des Spindelrohrs 146 ein Spannrohr 158 zu einem hydraulischen Spannzylinder 160, welcher auf einer dem Werkstückspannmittel 142 gegenüberliegenden Seite der Pinole 64 angeordnet ist, so daß über den hydraulischen Spannzylinder 160 die Spannzange 156 in üblicher Weise über das Spannrohr 158 betätigbar ist.

Die in der Pinole 64 eingesetzte Werkstückspindel 140 ist dabei durch Bewegung der Pinole 64 in Richtung ihrer Mittelachse 78 auf das in der gegenüberliegenden Bearbeitungseinrichtung, beispielsweise einer Werkstückspindel, angeordnete Werkstück W zu- oder von diesem wegbewegbar.

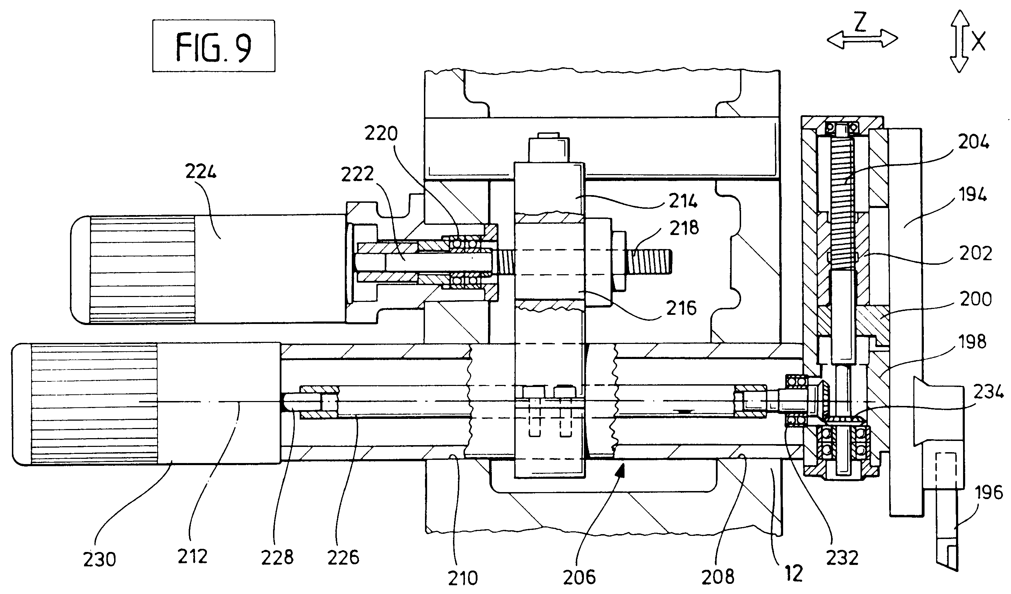

Bei dem dargestellten Ausführungsbeispiel sind die in den Positionen 42a bis f und 62 a bis f angeordneten Bearbeitungseinrichtungen 40 in unterschiedlichen bezüglich den Ständern 12 und 14 stationären Stationen 190a bis f und 192 a bis f durch Drehen der Träger 20 oder 50 positionierbar. An den beiden Ständern 12 und 14 sind einer oder mehreren der Stationen 190 oder einer oder mehreren der Stationen 192, in welche die Bearbeitungseinrichtungen 40 bringbar sind, insgesamt in Richtung der X- und Z-Achse gegenüber den Ständern 12, 14 bewegbare Werkzeugschlitten 194 zugeordnet, auf welchen Bearbeitungswerkzeuge 196 montiert sind, wie in Fig. 1 und 9 dargestellt.

Der Werkzeugschlitten 194 sitzt dabei auf einer als Ganzes mit 198 bezeichneten Schlittenführung und ist auf dieser quer zur Drehachse 22 und somit auch quer zu den Mittelachsen 78 der Pinolen 64, vorzugsweise senkrecht zu diesen, in Richtung der X-Achse verschiebbar. Zur definierten Positionierung des Schlittens 194 trägt dieser eine Halterung 200 für eine Kugelgewindemutter 202, welche von einer Kugelgewindespindel 204 durchsetzt ist. Die Kugelgewindespindel 204 ist dabei endseitig in der Schlittenführung 198 und axial unverschieblich drehbar gelagert.

Die gesamte Schlittenführung 198 ist in Richtung der Z-Achse bewegbar und sitzt dazu ihrerseits an einer Z-Pinole 206, welche den jeweiligen Ständer 12 oder 14 durchsetzt und in Führungen 208 und 210 des jeweiligen Ständers 12 oder 14 in Richtung ihrer Mittelachse 212 parallel zur Drehachse 22 oder zu den Mittelachsen 78 verschiebbar gelagert ist.

Zur Verschiebung der Z-Pinole 206 umgreift diese ein Halter 214, welcher eine neben der Z-Pinole 206 angeordnete Kugelgewindemutter 216 trägt, die ihrerseits von einer Kugelgewindespindel 218 durchsetzt ist, wobei sich diese Kugelgewindespindel 218 innerhalb des jeweiligen Ständers 12 oder 14 erstreckt und parallel zur Mittelachse 212 ausgerichtet ist. Die Kugelgewindespindel 218 ist beispielsweise an einem Ende mittels eines Drehlagers 220 drehbar in dem jeweiligen Ständer 12, 14 gelagert und mit einer Antriebswelle 222 eines als Ganzes mit 224 bezeichneten Vorschubmotors verbunden, welcher auf einer der Schlittenführung 198 gegenüberliegenden Seite des Ständers 12 oder 14 übersteht und an diesem gehalten ist.

Zum Antrieb der Kugelgewindespindel 204 ist die Z-Pinole 206 noch von einer Antriebswelle 226 durchsetzt, die mit einer Motorwelle 228 eines Vorschubmotors 230 verbunden ist und sich bis zur Kugelgewindespindel 204 erstreckt. Die Antriebswelle 226 ist dabei endseitig der Z-Pinole 206 in einem Drehlager 232 drehbar gelagert und über ein Kegelradgetriebe 234 in Antriebsverbindung mit der Kugelgewindespindel 204.

Mittels des Vorschubmotors 230 ist somit die Kugelgewindespindel 204 drehbar und somit der Querschlitten 194 quer zur jeweiligen Spindelachse 44 oder Mittelachse 78 verschiebbar, während durch den Vorschubmotor 224 die gesamte Z-Pinole 206 parallel zu ihrer Mittelachse 212 und somit auch parallel zu den Spindelachsen 44 oder den Mittelachsen 78 verschiebbar ist.

Zur Ansteuerung der Drehantriebe 28 und 58, des insgesamt in Richtung der X- und Z-Achse bewegbaren Werkzeugs 196 in den einzelnen Stationen 190 und 192 sowie der Bearbeitungseinrichtungen 40 in den einzelnen Positionen 42 und 62 ist eine als Ganzes mit 240 bezeichnete Maschinensteuerung vorgesehen (Fig. 1).

Eine Verbindung zwischen der Maschinensteuerung 240 und den auf den Trommeln 20 und/oder 50 angeordneten Bearbeitungseinrichtungen 40 erfolgt im Fall jeder der Trommeln 20 und/oder 50 durch eine auf einer dem Arbeitsraum abgewandten Seite des jeweiligen Ständers 12 bzw. 14 angeordnete Versorgungsverbindung 242 zwischen dem Maschinengestell 10 und der jeweiligen Trommel 20 bzw. 50, welche einen Versorgungsstrang 244 umfaßt, der in einer Gliederkette 246 geführt ist, wobei der Versorgungsstrang 244 an einem Ende 248 fest zum Maschinengestell 10 auf der Rückseite des jeweiligen Ständers 12 bzw. 14 angeordnet ist und mit einem anderen Ende 250 fest mit einem über die jeweilige Trommel 20 bzw. 50 auf der jeweils dem Arbeitsraum 18 gegenüberliegenden Seite überstehenden Rohr 252 verbunden ist, wobei der Versorgungsstrang 244 zwischen den beiden Enden 248 und 250 in einer senkrecht zur Drehachse 22 verlaufenden Ebene 253 spiralförmig verläuft. Ferner ist das Rohr 252 noch von einem Schneckengehäuse 254 umgeben, aus welchem der Versorgungsstrang 244 durch eine Öffnung 256 herausgeführt ist.

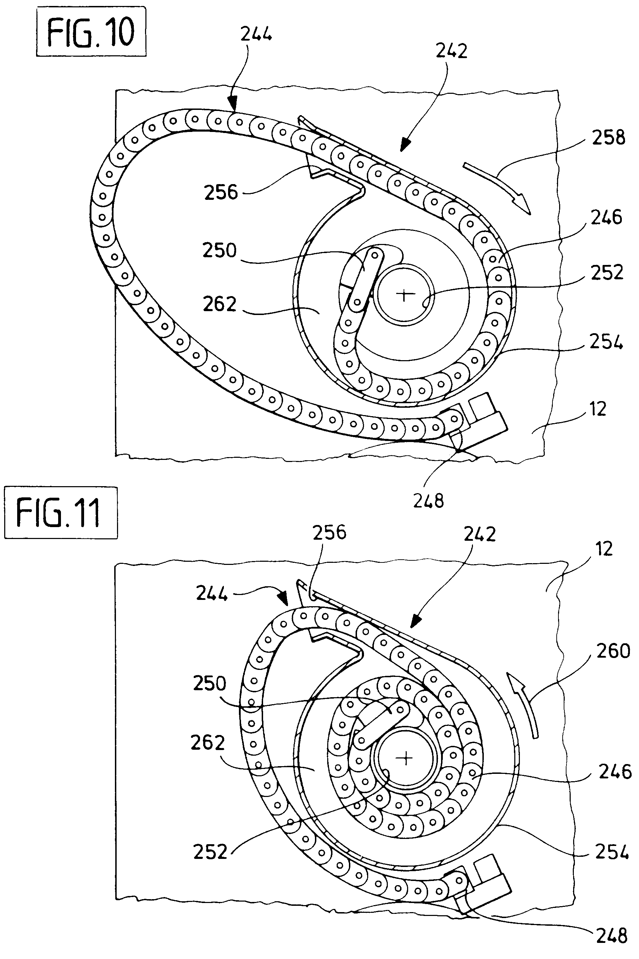

Wie in Fig. 10 und Fig. 11 dargestellt, ist die jeweilige Trommel 20 bzw. 50 um einen Maximalwinkel von beispielsweise 360-360/(Zahl der Stationen) Grad, bei diesem Ausführungsbeispiel 300 Grad, von einer in Fig. 10 dargestellten Ausgangsstellung in Richtung des Pfeils 258 in eine in Fig. 11 dargestellte Endstellung drehbar, wobei in dieser Endstellung der Versorgungsstrang 244 sich in Form einer engen Spirale um das Rohr 252 aufgewickelt hat. Ferner ist die jeweilige Trommel 20 bzw. 50 entgegengesetzt zum Pfeil 258, das heißt in Richtung des Pfeils 260, von der in Fig. 11 dargestellten Endstellung in die Ausgangsstellung dargestellt in Fig. 10, drehbar, wobei sich der spiralförmig um das Rohrs 252 gewickelte Versorgungsstrang 244 abwickelt und sich durch die Öffnung 256 aus dem Schneckengehäuse 254 herausschiebt.

Vorzugsweise sind beiderseits des Schneckengehäuses 254 Führungsscheiben 262 vorgesehen, die den Versorgungsstrang 244 dabei in der senkrecht zur Drehachse 22 verlaufenden Ebene 253 halten.

Damit ist die jeweilige Trommel 20 bzw. 50 beispielsweise um den Winkel von 300 Grad in einzelnen Schritten so drehbar, daß jede der Bearbeitungseinrichtungen 40 in den Positionen 42 sämtliche Stationen 190 bzw. 192 durchläuft, so lange bis die Endstellung erreicht ist. Anschließend erfolgt ein schnelles Zurückdrehen ohne Anhalten in den einzelnen Stationen 190 bzw. 192 in die Ausgangsstellung und von dieser wieder ausgehend ein Durchlaufen mit Anhalten in den einzelnen Stationen 190 bzw. 192.

Mit einer erfindungsgemäßen Mehrspindeldrehmaschine sind nun mit nachfolgend im einzelnen beschriebenen Versionen folgende Bearbeitungen durchführbar.

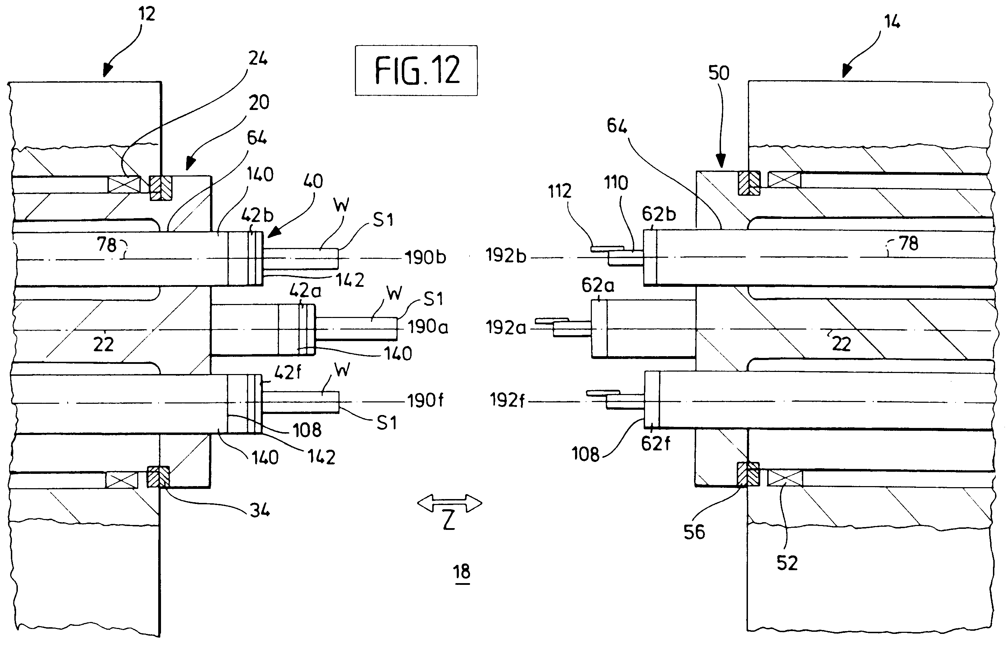

Bei einer einfachsten Version der erfindungsgemäßen Mehrspindeldrehmaschine umfaßt jede der Bearbeitungseinheiten 40 in der Trommel 20 eine Werkstückspindel 140, in deren Werkstückspanneinrichtung 142 ein Werkstück W spannbar ist (Fig. 12).

Die der ersten Trommel gegenüberliegende zweite Trommel 50 umfaßt in den Pinolen 64 angeordnete und dem Arbeitsraum 18 zugewandte Werkzeuge 112, die an Werkzeughaltern 110 gehalten sind (Fig. 12).

Das Werkstück W ist nun durch Bewegen der Werkstückspindel 140 in Richtung der Mittelachse 78 der Pinole 64 in Richtung des Werkzeugs 112 bewegbar, wobei diese Bewegung eine Z-Achsenbewegung zur Bearbeitung des Werkstücks W darstellt. Das Werkstück W ist dabei gleichzeitig durch den Einbaumotor 152 rotierend angetrieben, so daß durch die Z-Achsenbewegung zwischen dem Werkstück W und dem Werkzeug 112 eine Bearbeitung des Werkstücks W auf einer Seite S1 durchführbar ist.

Eine derartige Bearbeitung des Werkstücks W wird beispielsweise, wie in Fig. 12 dargestellt, in der Station 190a mit dem in der gegenüberliegenden Station 192a stehenden Werkzeug 112 begonnen und aufrecht erhalten während eines Weiterschaltens der Trommeln 20 und 50 in die Station 190b bzw. 192b, wobei die Trommeln 20 und 50 synchron zueinander mittels der Drehantriebe 28 und 58 gedreht werden, so daß die Bearbeitungseinrichtung 40 in der Position 62a von der Station 192a in die Station 192b bewegt wird.

Beispielsweise kann im Anschluß daran die Bearbeitung unterbrochen werden und das Werkstück in der Werkstückspindel 140 von der Station 190b in die Station 190c durch Drehen der Trommel 20 mittels des Drehantriebs 28 bewegt werden, während die das Werkzeug 112 tragende Bearbeitungseinrichtung 40 in Position 62a der Trommel 50 durch Zurückdrehen der Trommel 50 wieder in die Station 192a bewegt wird, um das aus der Station 190f in die Station 190a kommende Werkstück W wieder in dieser zu bearbeiten.

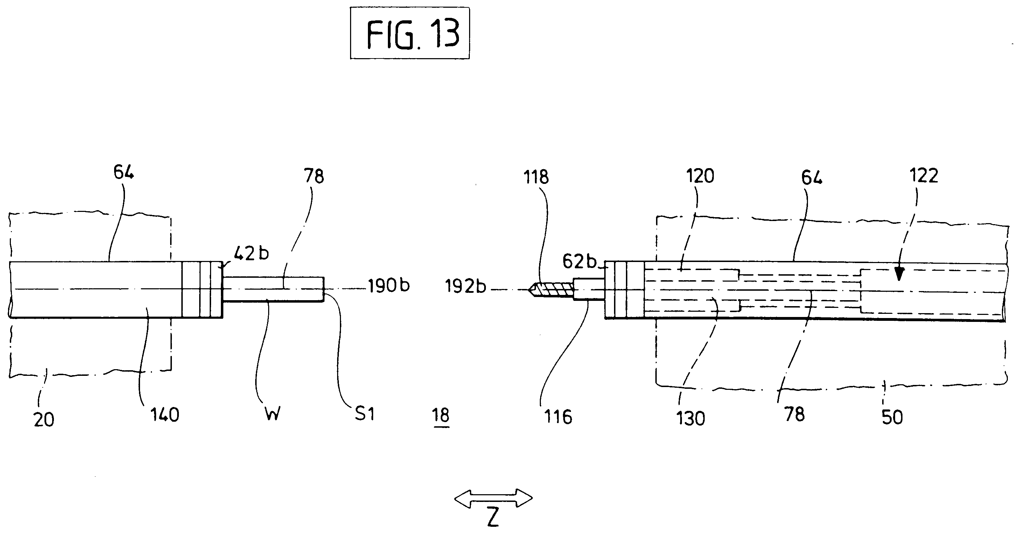

Analog zur Bearbeitung des Werkstücks W mittels des Werkzeugs 112 besteht bei einer zweiten Version die Möglichkeit, wie in Fig. 13 dargestellt, beispielsweise in der Spindelposition 190b das Werkstück W mittels des in der Station 192b zur Verfügung stehendem rotierenden Werkzeugs 118 zu bearbeiten, welches in der drehbaren Werkzeugaufnahme 120 gelagert und durch den Einbaumotor 122 in der Pinole 64 rotierend angetrieben ist. Auch hier erfolgt die Relativbewegung zwischen dem Werkstück W und dem Werkzeug 118 längs der Z-Achse durch Verschieben der Werkstückspindel 140 in der Pinole 64 in der im Zusammenhang mit der Fig. 12 beschriebenen Art und Weise.

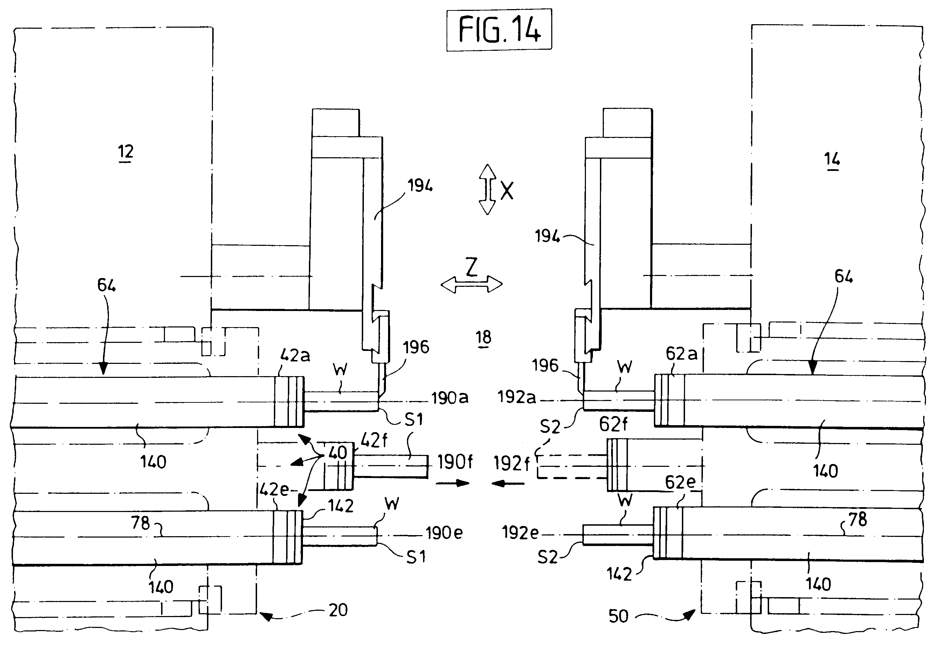

Bei einer weiteren Version einer erfindungsgemäßen Mehrspindeldrehmaschine, dargestellt in Fig. 14, sind in der Trommel 20 als Bearbeitungseinrichtungen 40 Werkstückspindeln 140 in den Pinolen 64 vorgesehen und außerdem sind in der zweiten Trommel 50 in den Pinolen 64 ebenfalls Werkstückspindeln 140 vorgesehen, wobei die Zahl der Werkstückspindeln 140 in beiden Trommeln identisch ist.

Die Werkstückspindeln 140 sind mit ihren Spindelachsen 78 jeweils in gleichem radialen Abstand von der Drehachse 22 angeordnet und außerdem im selben Winkelabstand voneinander, so daß jede der Werkstückspindeln 140 in jeder der Trommeln 20, 50 in jeder der Stationen 190 und 192 positionierbar ist.

Werden die Drehantriebe 28 und 58 mittels der Steuerung 240 synchron angesteuert, so sind dieselben Drehbearbeitungen möglich, wie bei den aus dem Stand der Technik bekannten Maschinen, allerdings mit dem Vorteil, daß der Arbeitsraum 18 zwischen den Stirnseiten beider Trommeln völlig frei ist und damit die Werkstücke W in den einzelnen Stationen 190 und 192 für Werkzeuge 196 besser zugänglich sind und außerdem für die Anordnung der Werkzeuge 196 mehr Raum vorhanden ist.

Vorzugsweise sind bei dieser Version auch die jeweils einander gegenüberstehenden Werkstückspindeln 140 in Richtung der Mittelachse 78 bewegbar.

Bei dieser Version besteht nun die Möglichkeit, beispielsweise in der Station 190a und 192a jeweils mittels des Werkzeugs 196, angeordnet auf jeweils einem beschriebenen Schlitten 194, die Werkstücke W zu bearbeiten, wobei die Werkzeuge 196 einerseits durch Bewegung der Schlitten 194 relativ zum Werkstück W längs der X-Achse bewegbar sind und andererseits die Werkstücke W relativ zum Werkzeug 196 in Richtung der Z-Achse durch Verschieben der entsprechenden Pinole 64 in Richtung deren Mittelachse 78 bewegbar sind.

Dabei erfolgt in der Station 190a beispielsweise eine Bearbeitung des Werkstücks W auf der Seite S1 und in der Station 192a eine Bearbeitung des Werkstücks W auf der Seite S2, das heißt, in jeder Station eine Bearbeitung eines Werkstücks W auf der Vorderseite S1 und des gegenüberliegenden Werkstücks W auf der Rückseite S2.

Bei einer derartigen Version ist es ferner möglich, beispielsweise in den Stationen 190f und 192f eine Übergabe des Werkstücks W von der Werkstückspindel 140 in der Position 42f in die Werkstückspindel 140 in der Position 62f dadurch vorzunehmen, daß die Werkstückspindeln 140 sich in Richtung deren Mittelachse 78 aufeinander zu bewegen und das Werkstück W von der Werkstückspanneinrichtung 142 in der Position 42f in die Werkstückspanneinrichtung 142 der Position 62f zu übergeben, so daß beispielsweise in den Stationen 190a bis 190e eine Bearbeitung der Vorderseite S1 des Werkstücks W erfolgt, in der Station 190f eine Übergabe des Werkstücks W von der Werkstückspindel 140 in der Position 42f in die Werkstückspindel 140 der Position 62f in der Station 192f und ausgehend davon in den Stationen 192a bis 192e eine Bearbeitung der Rückseite S2 des Werkstücks W erfolgt.

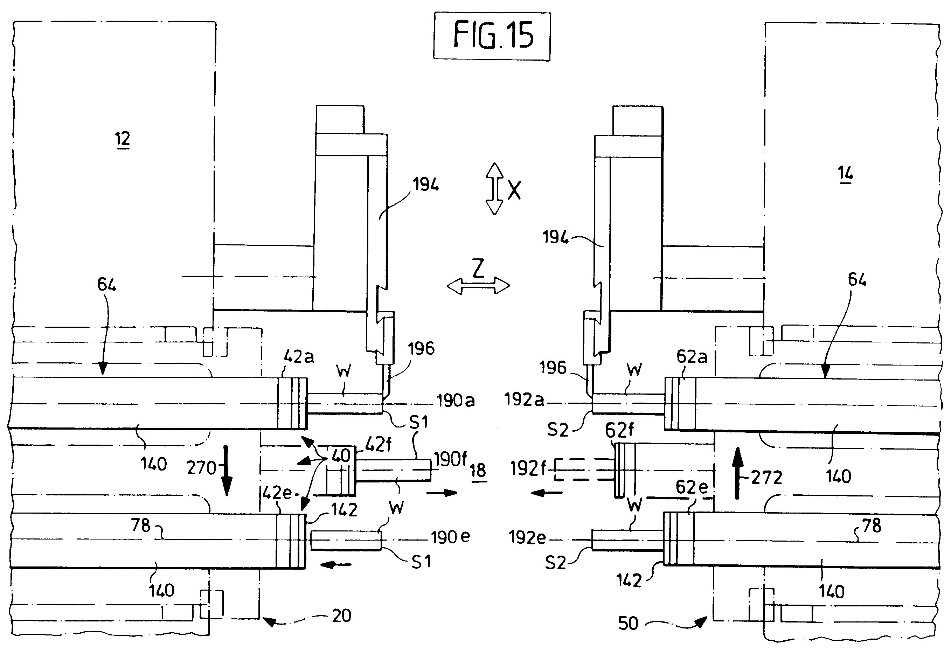

Alternativ dazu besteht bei dieser Version der erfindungsgemäßen Mehrspindeldrehmaschine die Möglichkeit, in den Stationen 190f und 192f, wie in Fig. 15 dargestellt, die Übergabe des Werkstücks von der Werkstückspindel 140 in der Position 42f in die Werkstückspindel 140 in der Position 62f durchzuführen, allerdings diese Stationen mit unterschiedlichem Drehsinn anzufahren, so daß sich beispielsweise, wie in Fig. 15 dargestellt, die Trommel 20 in Richtung des Pfeils 270 dreht, so daß jeweils die nächstfolgende Werkstückspindel 140 aus der Station 190a kommt und dann in der Station 190f steht, um das Werkstück W zu übergeben, andererseits aber die Trommel 50 entgegengesetzt, das heißt in Richtung des Pfeils 272 gedreht wird, so daß die nächstfolgende Werkstückspindel 140 in der Station 192f aus der Station 192e kommt, in welcher beispielsweise vorgesehen ist, daß das Werkstück W aus der in dieser Station stehenden Werkstückspindel 140 in einer Entladestation abgelegt wird, so daß die freie Werkstückspindel 140 aus der Station 192e in die Station 192f kommt, in dieser das Werkstück aufnimmt und die nächstfolgende Bearbeitung nach dem nächsten Weiterschalten der Trommel 50 in der Station 192a erfolgt.

Dagegen kann in der Station 190e in die in dieser stehende Werkstückspindel 140, in welcher dann, wenn sie aus der Station 190f kommt, kein Werkstück W mehr gehalten ist, aus einer Beladeeinrichtung ein Werkstück als Rohling eingesetzt werden.

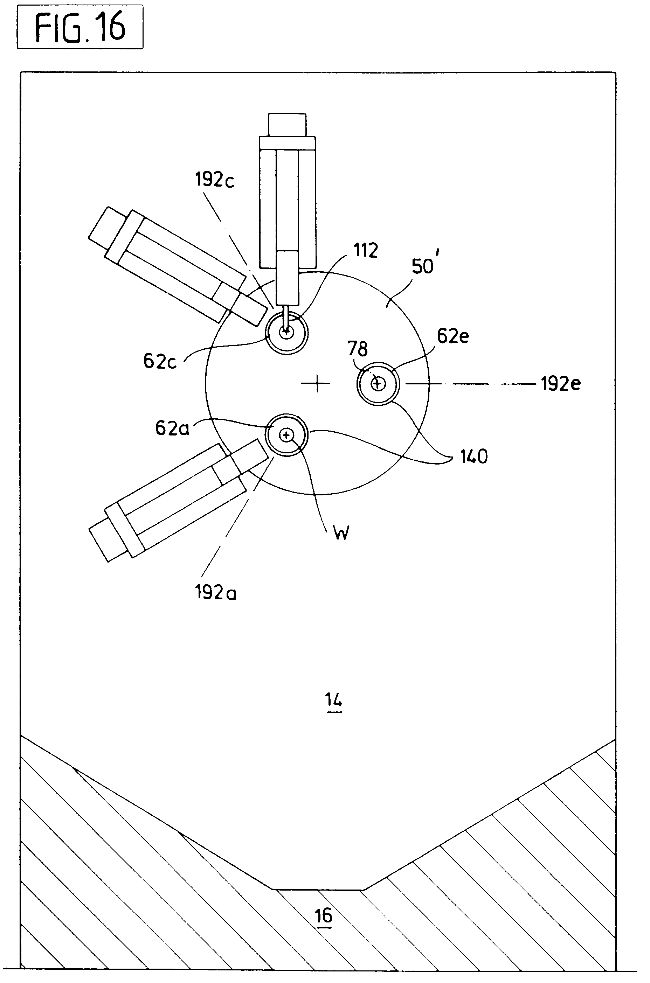

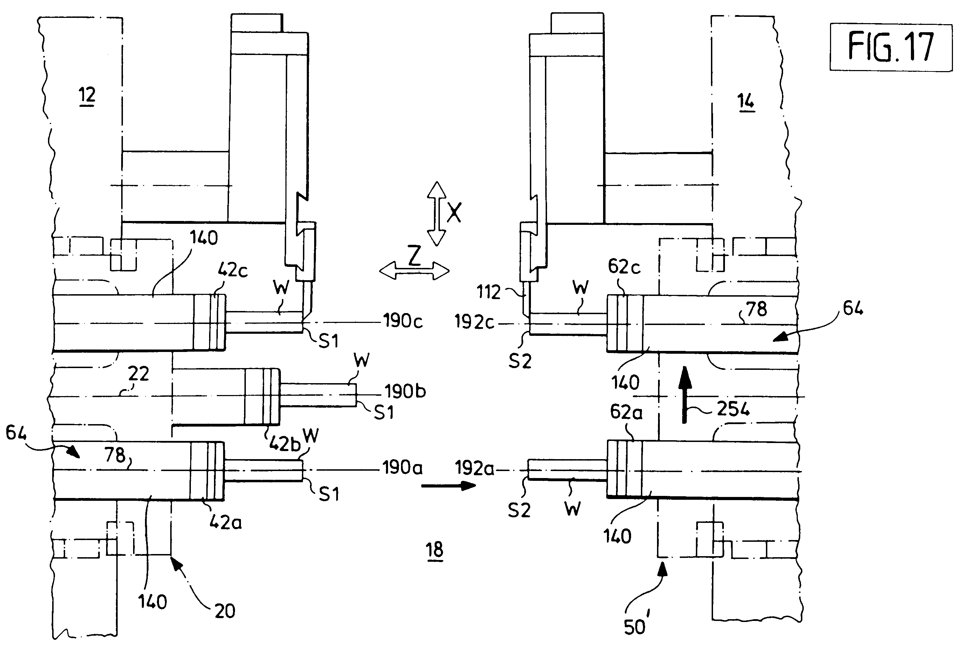

Bei einer weiteren Version einer erfindungsgemäßen Mehrspindeldrehmaschine, dargestellt in Fig. 16 und schematisch dargestellt in Fig. 17, sind in der Trommel 50' nicht, wie bei der Trommel 50 und in Fig. 3 dargestellt, sechs Werkstückspindeln als Bearbeitungseinrichtungen 40 vorgesehen, sondern nur drei Werkstückspindeln 140, und zwar in den Positionen 62a, 62c und 62e, so daß diese Werkstückspindeln 140 einen Winkelabstand voneinander aufweisen, der doppelt so groß ist wie der Winkelabstand der Werkstückspindeln 140 in der Trommel 20.

Wie in Fig. 17 dargestellt, besteht bei dieser Version der erfindungsgemäßen Mehrspindeldrehmaschine beispielsweise bei in den Stationen 190a und 192a stehenden Werkstückspindeln 140 die Möglichkeit, das Werkstück W von der in der Position 42a stehenden Werkstückspindel 140 in die Werkstückspindel 140 in der Position 62a zu übergeben und dieses mit der Werkstückspindel 140 in der Position 62a in die Station 192c zu bringen und in der Station 192c mittels eines Werkzeugs 112 zu bearbeiten, wozu die Trommel 50' gedreht wird. In der Station 192c kann nun eine Bearbeitung der Seite S2 mit dem Werkzeug 112 während einer Zeitdauer erfolgen, die völlig unabhängig ist von den Bearbeitungen des Werkstücks W das in einer Werkstückspindel 140 der Trommel 20 gespannt ist. Die einzige Randbedingung für die Drehbewegung der Trommel 50' ist die, daß in der Station 192a für das Übergeben des Werkstücks W aus der in der Station 190a stehenden Werkstückspindel 140 die Werkstückspindel 140 zur Aufnahme zur Verfügung steht.

Dagegen erfolgt bei den Werkstücken, die in Werkstückspindeln 140 gehalten sind, die in der Spindeltrommel 20 sitzen, die Möglichkeit, diese Werkstücke W in den Stationen 190 und je nach Drehrichtung der Trommel 20 in den Stationen 190c und 190b oder in den Stationen 190e und 190f vor der Übergabe in der Station 190a auf der Seite S1 zu bearbeiten, wobei ebenfalls die Intervalle für diese Bearbeitung völlig unabhängig sind von den Intervallen der Bearbeitung auf der Seite S2.

Eine derartige unterschiedliche Zahl von Werkstückspindeln 140 in der Trommel 50' ist beispielsweise dann einzusetzen, wenn die Bearbeitungen auf der Seite S2 andere Zeiten erfordern und beispielsweise auch eine geringere Anzahl unterschiedlicher Werkzeuge, während die Bearbeitungen des Werkstücks W auf der Seite S1 eine Vielzahl von unterschiedlichsten Werkzeugen erfordern.

## Patentansprüche

1. Mehrspindeldrehmaschine umfassend ein Maschinengestell (10), zwei auf gegenüberliegenden Seiten eines Arbeitsraums (18) angeordnete und an dem Maschinengestell (10) jeweils um eine im wesentlichen horizontale Drehachse (22) drehbar gelagerte Trommeln (20, 50), an den Trommeln (20, 50) in jeweils einzelnen Positionen angeordnete Bearbeitungseinrichtungen (40) mit im wesentlichen parallel zur Drehachse (22) ausgerichteten Mittelachsen (44) und Werkzeuge (112, 118) zur Bearbeitung von in mindestens einem Teil der Bearbeitungseinrichtungen (40) gehaltenen Werkstücken (W),
**dadurch gekennzeichnet,**
daß die Trommeln (20, 50) unabhängig voneinander gegenüber dem Maschinengestell (10) um ihre Drehachse (22) drehbar sind.

2. Mehrspindeldrehmaschine nach Anspruch 1, dadurch gekennzeichnet, daß der zwischen einander zugewandten Stirnseiten der Trommeln (20, 50) liegende Arbeitsraum (18) frei von mechanischen Verbindungen zwischen den Trommeln (20, 50) ist.

3. Mehrspindeldrehmaschine nach Anspruch 1 oder 2, dadurch gekennzeichnet, daß jede der Trommeln (20, 50) durch einen eigenen Drehantrieb (28, 58) antreibbar ist.

4. Mehrspindeldrehmaschine nach Anspruch 3, dadurch gekennzeichnet, daß jede Trommel (20, 50) mit dem zugeordneten Drehantrieb (28, 58) in einem für die Trommel vorgesehenen Ständer (12, 14) des Maschinengestells (10) vorgesehen ist und jeder Ständer (12, 14) mit der Trommel (20, 50) und dem Drehantrieb (28, 58) eine modulare Einheit des Maschinengestells (10) bildet.

5. Mehrspindeldrehmaschine nach Anspruch 3 oder 4, dadurch gekennzeichnet, daß die Drehantriebe (28, 58) für die Trommeln (20, 50) als NC-gesteuerte Drehachsenantriebe ausgebildet sind.

6. Mehrspindeldrehmaschine nach einem der Ansprüche 3 bis 5, dadurch gekennzeichnet, daß die Drehantriebe (28, 58) der Trommeln (20, 50) über eine Steuerung (240) miteinander korrelierbar sind.

7. Mehrspindeldrehmaschine nach einem der voranstehenden Ansprüche, dadurch gekennzeichnet, daß die beiden Trommeln (20, 50) um dieselbe Drehachse (22) drehbar sind.

8. Mehrspindeldrehmaschine nach einem der voranstehenden Ansprüche, dadurch gekennzeichnet, daß die Bearbeitungseinrichtungen (40) einer Trommel (20, 50) mit ihren Mittelachsen (44) in im wesentlichen gleichem radialen Abstand von der Drehachse (22) angeordnet sind.

9. Mehrspindeldrehmaschine nach einem der voranstehenden Ansprüche, dadurch gekennzeichnet, daß die Bearbeitungseinrichtungen (40) einer Trommel (20, 50) im selben Winkelabstand voneinander um die Drehachse (22) herum angeordnet sind.

10. Mehrspindeldrehmaschine nach einem der voranstehenden Ansprüche, dadurch gekennzeichnet, daß die Bearbeitungseinrichtungen (40) auf beiden Trommeln (20, 50) im gleichen radialen Abstand von der Drehachse (22) der jeweiligen Trommel (20, 50) angeordnet sind.

11. Mehrspindeldrehmaschine nach einem der voranstehenden Ansprüche, dadurch gekennzeichnet, daß die Zahl der Bearbeitungseinrichtungen (40) auf der ersten Trommel (20) gleich der Zahl der Bearbeitungseinrichtungen (40) auf der zweiten Trommel (50) ist.

12. Mehrspindeldrehmaschine nach Anspruch 11, dadurch gekennzeichnet, daß auf beiden Trommeln (20, 50) die Bearbeitungseinrichtung (40) in gleichen Winkelabständen voneinander um die Drehachse (22) herum angeordnet sind.

13. Mehrspindeldrehmaschine nach einem der Ansprüche 1 bis 10, dadurch gekennzeichnet, daß die Zahl der Bearbeitungseinrichtungen (40) auf einer Trommel (50') kleiner ist als die Zahl der Bearbeitungseinrichtungen (40) auf der anderen Trommel (20).

14. Mehrspindeldrehmaschine nach einem der voranstehenden Ansprüche, dadurch gekennzeichnet, daß zumindest ein Teil der Bearbeitungseinrichtungen (40) als Werkstückspindel (140) ausgebildet ist.

15. Mehrspindeldrehmaschine nach Anspruch 14, dadurch gekennzeichnet, daß die Bearbeitungseinrichtungen (40) einer Trommel (20) als Werkstückspindeln (140) ausgebildet sind.

16. Mehrspindeldrehmaschine nach einem der voranstehenden Ansprüche, dadurch gekennzeichnet, daß mindestens eine der Bearbeitungseinrichtungen (40) relativ zu deren Trommel (20, 50) in Richtung ihrer Mittelachse (44) bewegbar ist.

17. Mehrspindeldrehmaschine nach Anspruch 16, dadurch gekennzeichnet, daß die Bearbeitungseinrichtungen (40) relativ zur jeweiligen Trommel (20, 50) in Richtung ihrer Mittelachse (44) unabhängig voneinander bewegbar sind.

18. Mehrspindeldrehmaschine nach Anspruch 17, dadurch gekennzeichnet, daß jeder in Richtung ihrer Mittelachse (44) bewegbaren Bearbeitungseinrichtungen ein eigener Linearantrieb (80) zugeordnet ist.

19. Mehrspindeldrehmaschine nach Anspruch 18, dadurch gekennzeichnet, daß jede Bearbeitungseinrichtung (40) ständig mit dem Linearantrieb (80) gekoppelt ist.

20. Mehrspindeldrehmaschine nach einem der Ansprüche 16 bis 19, dadurch gekennzeichnet, daß die Bearbeitungseinrichtung (40) bezüglich ihrer Position in Richtung der Mittelachse (44) mittels des Linearantriebs (80) definiert positionierbar und fixierbar ist.

21. Mehrspindeldrehmaschine nach einem der Ansprüche 16 bis 20, dadurch gekennzeichnet, daß jede Bearbeitungseinrichtung (40) relativ zur jeweiligen Trommel (20, 50) ausschließlich linear bewegbar ist.

22. Mehrspindeldrehmaschine nach einem der Ansprüche 16 bis 21, dadurch gekennzeichnet, daß der Linearantrieb (80) an der jeweiligen Trommel (20, 50) angeordnet ist.

23. Mehrspindeldrehmaschine nach einem der voranstehenden Ansprüche, dadurch gekennzeichnet, daß jede der Trommeln (20, 50) von einer Ausgangsstellung um einen Maximalwinkel bis zu einer Endstellung in einer Richtung (258) und dann wieder zurück in entgegengesetzter Richtung (260) in die Ausgangsstellung drehbar ist und jeweils vom Maschinengestell (10) zur jeweiligen Trommel (20, 50) ein flexibler Versorgungsstrang (244) geführt ist, welcher der Drehbewegung um den Maximalwinkel folgt.

## Claims

1. Multiple-spindle turning machine comprising a machine frame (10), two drums (20, 50) arranged on opposite sides of an operating area (18) and mounted on the machine frame (10) to be respectively rotatable around an essentially horizontal rotational axis (22), machining means (40) arranged on the drums (20, 50) in respective individual positions with central axes (44) aligned essentially parallel to the rotational axis (22), and tools (112, 118) for machining work pieces (W) held in at least one portion of the machining means (40), characterised in that the drums (20, 50) are rotatable around their rotational axis (22) independently of one another relative to the machine frame (10).

2. Multiple-spindle turning machine according to Claim 1, characterised in that the operating area (18) located between faces of the drums (20, 50) facing one another is free from mechanical connections between the drum (20, 50).

3. Multiple-spindle turning machine according to Claim 1 or 2, characterised in that each of the drums (20, 50) may be driven by its own rotary drive (28, 58).

4. Multiple-spindle turning machine according to Claim 3, characterised in that each drum (20, 50) is provided with the associated rotary drive (28, 58) in a stand (12, 14) of the machine frame (10) provided for the drum, and each stand (12, 14) forms a modular unit of the machine frame (10) with the drum (20, 50) and the rotary drive (28, 58).

5. Multiple-spindle turning machine according to Claim 3 or 4, characterised in that the rotary drives (28, 58) for the drums (20, 50) are constructed as numerically controlled rotational axis drives.

6. Multiple-spindle turning machine according to Claims 3 to 5, characterised in that the rotary drives (28, 58) of the drums (20, 50) may be correlated with one another via a control means (240).

7. Multiple-spindle turning machine according to one of the preceding claims, characterised in that the two drums (20, 50) are rotatable around the same rotational axis (22).

8. Multiple-spindle turning machine according to one of the preceding claims, characterised in that the machining means (40) of a drum (20, 50) are arranged with their central axes (44) at essentially the same radial distance from the rotational axis (22).

9. Multiple-spindle turning machine according to one of the preceding claims, characterised in that the machining means (40) of a drum (20, 50) are arranged around the rotational axis (22) at the same angular distance from one another.

10. Multiple-spindle turning machine according to one of the preceding claims, characterised in that the machining means (40) on the two drum (20, 50) are arranged at the same radial distance from the rotational axis (22) of the respective drum (20, 50).

11. Multiple-spindle turning machine according to one of the preceding claims, characterised in that the number of the machining means (40) on the first drum (20) is equal to the number of machining means (40) on the second drum (50).

12. Multiple-spindle turning machine according to Claim 11, characterised in that the machining means (40) are arranged at equal angular distances from one another on the two drums (20, 50) around the rotational axis (22).

13. Multiple-spindle turning machine according to one of Claims 1 to 10, characterised in that the number of machining means (40) on one drum (50') is smaller than the number of machining means (40) on the other drum (20).

14. Multiple-spindle turning machine according to one of the preceding claims, characterised in that at least one portion of the machining means (40) is constructed as a work piece spindle (140).

15. Multiple-spindle turning machine according to Claim 14, characterised in that the machining means (40) of one drum (20) are constructed as work piece spindles (140).

16. Multiple-spindle turning machine according to one of the preceding claims, characterised in that at least one of the machining means (40) is movable relative to its drum (20, 50) in the direction of its central axis (44).

17. Multiple-spindle turning machine according to Claim 16, characterised in that the machining means (40) are movable independently of one another in the direction of their central axis (44) relative to the respective drum (20, 50).

18. Multiple-spindle turning machine according to Claim 17, characterised in that each machining means movable in the direction of its central axis (44) is associated with its own linear drive (80).

19. Multiple-spindle turning machine according to claim 18, characterised in that each machining means (40) is constantly coupled to the linear drive (80).

20. Multiple-spindle turning machine according to one of Claims 16 to 19, characterised in that the machining means (40) can be specifically positioned and fixed with respect to its position in the direction of the central axis (44) by means of the linear drive (80).

21. Multiple-spindle turning machine according to one of Claims 16 to 20, characterised in that each machining means (40) is solely linearly movable relative to the respective drum (20, 50).

22. Multiple-spindle turning machine according to one of Claims 16 to 21, characterised in that the linear drive (80) is arranged on the respective drum (20, 50).

23. Multiple-spindle turning machine according to one of the preceding claims, characterised in that each of the drums (20, 50) may be rotated from an initial position around a maximum angle as far as an end position in one direction (258) and then back again in the opposite direction (260) into the initial position, and a flexible supply strand (244), which follows the rotational movement around the maximum angle, is respectively directed from the machine frame (10) to the respective drum (20, 50).

## Revendications

1. Tour multibroche comprenant un bâti de machine (10), deux tambours (20, 50) disposés sur des côtés opposés l'un à l'autre d'un espace de travail (18) et montés en rotation par rapport au bâti de machine (10), chacun autour d'un axe de rotation (22) sensiblement horizontal, des dispositifs d'usinage (40) disposés respectivement dans des positions individuelles sur les tambours (20, 50) et présentant des axes centraux (44) orientés sensiblement de manière parallèle à l'axe de rotation (22), et des outils (112, 118) destinés à l'usinage de pièces (W) maintenues dans au moins une partie des dispositifs d'usinage (40),
caractérisé en ce que les tambours (20, 50) peuvent tourner indépendamment l'un de l'autre par rapport au bâti de machine (10), autour de leur axe de rotation (22).

2. Tour multibroche selon la revendication 1, caractérisé en ce que l'espace de travail (18) situé entre des faces frontales des tambours (20, 50) en regard l'une de l'autre, est libre de liaisons mécaniques entre les tambours (20, 50).

3. Tour multibroche selon la revendication 1 ou 2, caractérisé en ce que chacun des tambours (20, 50) peut être entraîné par son propre entraînement de rotation (28, 58).

4. Tour multibroche selon la revendication 3, caractérisé en ce que chaque tambour (20, 50), avec l'entraînement de rotation (28, 58) qui lui est associé, est prévu dans un montant (12, 14) du bâti de machine (10), affecté au tambour, et chaque montant (12, 14) forme avec le tambour (20, 50) et l'entraînement de rotation (28, 58), une unité modulaire du bâti de machine (10).

5. Tour multibroche selon la revendication 3 ou 4, caractérisé en ce que les entraînements de rotation (28, 58) pour les tambours (20, 50) sont réalisés en tant qu'entraînements d'axes de rotation pilotés par commande numérique.

6. Tour multibroche selon l'une des revendications 3 à 5, caractérisé en ce que les entraînements de rotation (28, 58) des tambours (20, 50) peuvent être pilotés corrélativement par l'intermédiaire d'une commande (240).

7. Tour multibroche selon l'une des revendications précédentes, caractérisé en ce que les deux tambours (20, 50) peuvent tourner autour du même axe de rotation (22).

8. Tour multibroche selon l'une des revendications précédentes, caractérisé en ce que les dispositifs d'usinage (40) d'un tambour (20, 50) sont disposés de manière à ce que leur axes centraux (44) soient sensiblement radialement équidistants de l'axe de rotation (22).

9. Tour multibroche selon l'une des revendications précédentes, caractérisé en ce que les dispositifs d'usinage (40) d'un tambour (20, 50) sont disposés autour de l'axe de rotation (22) en étant espacés les uns des autres selon un intervalle angulaire identique.

10. Tour multibroche selon l'une des revendications précédentes, caractérisé en ce que les dispositifs d'usinage (40) sont disposés, sur les deux tambours (20, 50), de manière à être radialement équidistants de l'axe de rotation (22) du tambour (20, 50) respectivement correspondant.

11. Tour multibroche selon l'une des revendications précédentes, caractérisé en ce que le nombre des dispositifs d'usinage (40) sur le premier tambour (20) est égal au nombre des dispositifs d'usinage (40) sur le second tambour (50).

12. Tour multibroche selon la revendication 11, caractérisé en ce que les dispositifs d'usinage (40) sont disposés, sur les deux tambours (20, 50), autour de l'axe de rotation (22) en étant espacés les uns des autres selon des intervalles angulaires identiques.

13. Tour multibroche selon l'une des revendications 1 à 10, caractérisé en ce que le nombre des dispositifs d'usinage (40) sur un tambour (50') est inférieur au nombre des dispositifs d'usinage (40) sur l'autre tambour (20).

14. Tour multibroche selon l'une des revendications précédentes, caractérisé en ce qu'au moins une partie des dispositifs d'usinage (40) est réalisée sous forme de broche porte-pièce (140).

15. Tour multibroche selon la revendication 14, caractérisé en ce que les dispositifs d'usinage (40) d'un tambour (20) sont réalisés sous forme de broches porte-pièce (140).

16. Tour multibroche selon l'une des revendications précédentes, caractérisé en ce qu'au moins l'un des dispositifs d'usinage (40), est mobile dans la direction de son axe central (44), par rapport à son tambour (20, 50).

17. Tour multibroche selon la revendication 16, caractérisé en ce que les dispositifs d'usinage (40) sont mobiles indépendamment les uns des autres, dans la direction de leur axe central (44), par rapport au tambour (20, 50) respectivement correspondant.

18. Tour multibroche selon la revendication 17, caractérisé en ce qu'à chacun des dispositifs d'usinage (40) mobiles dans la direction de leur axe central (44), est associé son propre entraînement linéaire (80).

19. Tour multibroche selon la revendication 18, caractérisé en ce que chaque dispositif d'usinage (40) est couplé continuellement à l'entraînement linéaire (80).

20. Tour multibroche selon l'une des revendications 16 à 19, caractérisé en ce que le dispositif d'usinage (40) peut, quant à sa position dans la direction de l'axe central (44), être positionné et immobilisé de manière définie au moyen de l'entraînement linéaire (80).

21. Tour multibroche selon l'une des revendications 16 à 20, caractérisé en ce que chaque dispositif d'usinage (40) est mobile exclusivement de manière linéaire par rapport au tambour (20, 50) respectivement correspondant.

22. Tour multibroche selon l'une des revendications 16 à 21, caractérisé en ce que l'entraînement linéaire (80) est disposé sur le tambour (20, 50) respectivement correspondant.

23. Tour multibroche selon l'une des revendications précédentes, caractérisé en ce que chacun des tambours (20, 50) peut tourner d'un angle maximal, d'une position initiale jusque dans une position finale dans un sens (258) et de celle-ci retourner à nouveau, en sens inverse (260), dans la position initiale, et une ligne d'alimentation flexible (244), qui suit le mouvement de rotation d'angle maximal, conduit de chaque tambour (20, 50) au bâti de machine (10).
